# FASCICULE DE BREVET EUROPEEN

(11) **EP 4 522 869 B1**
(45) Date de publication et mention de la délivrance du brevet: **14.01.2026**
(21) Numéro de dépôt: 23727040.0
(22) Date de dépôt: 05.05.2023
(51) Int. Cl.: F04D 29/32

(54) **TURBOMACHINE D'AERONEF COMPORTANT DES AUBES D'HELICE A CALAGE VARIABLE**
FLUGZEUGTURBOMASCHINE MIT PROPELLERSCHAUFELN MIT VERSTELLBAREM ANSTELLWINKEL
AIRCRAFT TURBOMACHINE HAVING VARIABLE-PITCH PROPELLER BLADES

(30) Priorité: 10.05.2022 FR 2204388
(43) Date de publication de la demande: 19.03.2025
(73) Titulaire: SAFRAN AIRCRAFT ENGINES, 75015 Paris (FR)
(72) Inventeur: JOUDON, Vincent, 77550 MOISSY-CRAMAYEL (FR); TREBAOL, Julien David Alexandre, 77550 MOISSY-CRAMAYEL (FR); PAPIN, Thierry Georges Paul, 77550 MOISSY-CRAMAYEL (FR); MOUNIEN, Richard Anandavelou, 77550 MOISSY-CRAMAYEL (FR); DAM, Damien David Denis, 77550 MOISSY-CRAMAYEL (FR)
(74) Mandataire: Gevers & Orès
(86) Numéro de dépôt international: PCT/FR2023/000081
(87) Numéro de publication internationale: WO 2023/218139

(56) Documents cités:
- DE-C- 921 788
- FR-A1- 3 112 819
- US-A1- 2015 330 233
- US-B2- 8 753 088

## Description

### Domaine technique de l'invention

La présente invention concerne le domaine des turbomachines d'aéronef et en particulier des hélices propulsives de ces turbomachines qui comportent des aubes à calage variable.

### Arrière-plan technique

L'arrière-plan technique comprend notamment les documents US-B2-8,753,088 et DE-C-921 788.

Une hélice de turbomachine d'aéronef peut être carénée, comme c'est le cas d'une soufflante par exemple, ou non carénée comme c'est le cas d'une architecture du type open-rotor par exemple.

Une hélice comprend des aubes qui peuvent être à calage variable. La turbomachine comprend alors un mécanisme permettant de modifier l'angle de calage des aubes afin d'adapter la poussée générée par l'hélice en fonction des différentes phases de vol.

La conception d'une aube d'hélice met en jeu plusieurs disciplines dont les objectifs sont généralement antagonistes. Elle doit permettre des performances aérodynamiques optimales (c'est-à-dire fournir une poussée en maximisant le rendement), garantir une tenue mécanique de l'aube (c'est-à-dire tenir les contraintes mécaniques résultant des chargements statiques et dynamiques) tout en limitant la masse ainsi que la signature acoustique. En particulier, l'amélioration des performances aérodynamiques de l'hélice tend vers une augmentation du BPR (*By Pass Ratio*), ce qui se traduit par une augmentation de son diamètre externe et donc de l'envergure des aubes. Dans le même temps, sur certaines architectures de turbomachine, le démarrage moteur est effectué à un calage très ouvert, dit en drapeau. En effet, cette position de démarrage permet de consommer la puissance par le couple ce qui assure la sécurité machine en garantissant des régimes d'hélice faibles. Plus précisément, selon des considérations simples, la puissance est proportionnelle au produit du régime et du couple. Or, le couple est croissant avec l'incidence qui peut être augmentée via le calage. En effet, l'homme du métier en aérodynamique comprend que l'effort résultant sur un profil de pale est en première approximation perpendiculaire à la corde et peut se décomposer en deux composantes : la poussée selon l'axe moteur et la trainée de la pale dans le plan de l'hélice. Ainsi, avec l'augmentation du calage des aubes, l'effort résultant se déplace vers le plan d'hélice ce qui a pour effet d'augmenter la trainée du profil aérodynamique et de diminuer la poussée.

Par conséquent, dans le cas d'un démarrage en drapeau, la poussée générée par l'hélice est nulle, le couple est maximal et le régime minimal. Cependant, l'incidence devient tellement importante que les pales subissent alors un écoulement aérodynamique turbulent fortement décollé qui génère une forte excitation vibratoire. Cette excitation est à la fois large bande de par les petits vortex de la zone décollée, mais également intense sur certaines fréquences particulières dues aux grosses recirculations de Karman qui viennent faire osciller l'effort aérodynamique de façon importante. En particulier, sur des pales à large corde et de grande envergure qui génèrent beaucoup de trainée, cet effort est intense bien que le régime ne soit pas élevé.

Dans la technique actuelle, il est courant de fixer une aube à son support par une attache dite brochée. L'aube comprend un pied qui a une forme générale en queue d'aronde et qui est destiné à être engagé par complémentarité de formes dans une alvéole du support, cette alvéole étant classiquement réalisée par brochage.

Cependant, ce type de fixation présente des inconvénients. Notamment, l'effort aérodynamique peut provoquer des mouvements de solide rigide du pied d'aube dans son alvéole qui s'apparentent à du rotulage, et qui se traduit par un endommagement par frottement de la pale et de la cale intercalée entre le pied et le fond de l'alvéole, en quelques cycles seulement. L'attache brochée n'est ainsi pas une solution viable pour des aubes d'hélice à calage variable, à large corde et de grande envergure.

Dans les documents FR-A1-3 112 819 et FR-A1-3 112 820, la Demanderesse a proposé un type de fixation à bulbe. L'aube est équipée d'un pied adapté pour limiter les risques de rotulage. La particularité de ce pied de l'aube est liée à la présence d'un tronçon renflé ou bulbe qui permet une rétention optimale de l'aube le long de son axe. Par rapport à une attache brochée, cette technologie permet de limiter l'usure prématurée de l'aube lors des phases de vol qui sont susceptibles d'exciter les modes vibratoires de l'aube. Par ailleurs, le pied d'aube est très avantageux en termes d'encombrement et de finesse de profil aérodynamique.

L'aube fait partie d'un ensemble comportant également un système de calage angulaire de l'aube autour d'un axe appelé axe de calage. Le système de calage comporte un bol qui comprend une paroi annulaire s'étendant autour de l'axe, un fond inférieur fermé par une paroi de fond, et une ouverture supérieure par laquelle le bulbe est destiné à être inséré dans le bol.

La paroi de fond est configurée pour coopérer par complémentarité de formes avec l'extrémité libre du pied de façon à ce que le bol soit solidarisé en rotation avec le pied autour de l'axe.

Dans les documents précités, l'extrémité libre du pied comprend une protubérance qui est engagée dans un évidement de la paroi de fond du bol. Cette protubérance est encombrante et représente une masse significative pour l'aube qui a donc un impact sur son comportement en fonctionnement. La présente invention propose un perfectionnement à cette technologie, qui est simple, efficace et économique.

### Résumé de l'invention

L'invention propose un ensemble comportant une aube d'hélice et un système de calage angulaire de l'aube autour d'un axe, appelé axe de calage, pour une turbomachine d'aéronef,
l'aube présentant un pied s'étendant depuis une extrémité supérieure liée à une pale de l'aube jusqu'à une extrémité inférieure libre, le pied présentant un tronçon renflé, appelé "bulbe",
le système de calage angulaire de l'aube comportant un bol qui est délimité radialement par une paroi annulaire s'étendant autour de l'axe de calage, le bol comportant un fond inférieur fermé par une paroi de fond et une ouverture supérieure par laquelle le bulbe est destiné à être inséré axialement dans le bol, la paroi de fond étant configurée pour coopérer par complémentarité de formes avec l'extrémité libre du pied de façon à ce que le bol soit solidarisé en rotation avec le pied autour de l'axe de calage,
caractérisé en ce que la paroi de fond comprend une protubérance qui s'étend le long de l'axe de calage et qui est engagée dans un évidement de forme complémentaire de l'extrémité libre du pied.

La présente invention propose ainsi d'inverser la configuration de la technique antérieure et de prévoir l'évidement dans l'extrémité libre du pied en forme de bulbe, et donc la protubérance sur le fond du bol. Ceci est particulièrement avantageux car cela réduit l'encombrement du pied mais surtout sa masse. La masse de l'aube est donc réduite ce qui a un effet positif sur son comportement en fonctionnement, en particulier sous l'effet des forces centrifuges. L'ensemble selon l'invention peut comprendre une ou plusieurs des caractéristiques suivantes, prises isolément les unes des autres ou en combinaison les unes avec les autres :
- l'évidement et la protubérance sont décentrés par rapport audit axe de calage ;
- l'évidement et la protubérance sont centrés sur ledit axe de calage ;
- l'évidement est formé dans un partie en matériau métallique du pied ;
- l'évidement est formé dans une partie en matériau composite du pied ;
- l'évidement et la protubérance ont en section transversale une forme choisie parmi une ellipse, une étoile, une croix, et un polygone ;
- le bulbe présente en section une forme arrondie convexe tout autour de l'axe de calage ;
- le bulbe est relié à la pale par une échasse de plus petite section transversale que le bulbe ;
- la protubérance a une plus petite section transversale que le bulbe ;
- la protubérance a une plus petite section transversale que l'échasse.

L'invention concerne également une turbomachine d'aéronef comportant un ensemble tel que décrit dans ce qui précède.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] La figure 1 est une vue schématique en perspective d'une aube d'hélice pour une turbomachine d'aéronef,
[Fig.2] La figure 2 est une vue à plus grande échelle d'une partie de la figure 1 et montre le pied de l'aube,
[Fig.3] La figure 3 est une vue en coupe transversale selon le plan de coupe Pb de la figure 4 qui représente la forme et la position de l'extrémité inférieure libre du pied par rapport à l'axe de calage,
[Fig.4] La figure 4 est une vue en coupe axiale qui représente le pied de l'aube de la figure 1 fixé dans un bol d'un système de calage d'un ensemble selon la technique antérieure à l'invention,
[Fig.5] La figure 5 est une vue similaire à celle de la figure 4 et représente en coupe axiale un ensemble selon un mode de réalisation de l'invention,
[Fig.6] La figure 6 est une vue similaire à celle de la figure 5 et représente en coupe axiale un ensemble selon une variante de réalisation de l'invention, et
[Fig.7a-7i] Les figures 7a à 7i sont des vues très schématiques de protubérances de pieds d'aubes et montrent plusieurs variantes de l'invention.

### Description détaillée de l'invention

Dans la suite de la description, des éléments présentant une structure identique ou des fonctions analogues seront désignés par une même référence.

Dans la suite de la description, on adoptera à titre non limitatif une orientation axiale dirigée selon l'axe "A" de calage de l'aube, du bas, à proximité du pied de l'aube, vers le haut, à proximité de l'extrémité libre de l'aube. On adoptera aussi des directions radiales s'étendent orthogonalement à l'axe de calage depuis l'intérieur, à proximité de l'axe de calage, vers l'extérieur.

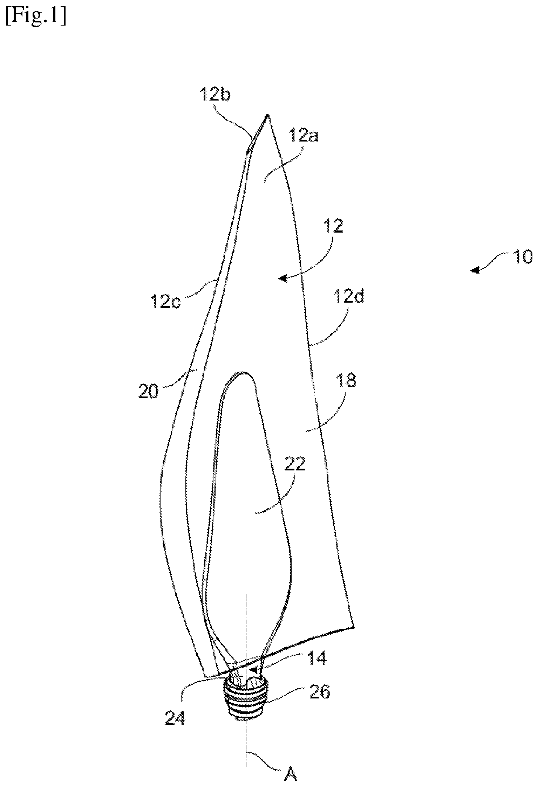

La figure 1 montre une aube 10 pour une hélice d'une turbomachine d'aéronef, cette hélice étant carénée ou non carénée.

L'aube 10 comprend une pale 12 reliée à un pied 14.

La pale 12 a un profil aérodynamique et comprend un intrados 12a et un extrados 12b qui sont reliés par un bord amont d'attaque 12c et par un bord aval de fuite 12d, les termes amont et aval faisant référence à l'écoulement des gaz autour de la pale 12 en fonctionnement.

La pale 12 a une extrémité supérieure qui est libre, appelée sommet, et une extrémité inférieure qui est reliée au pied 14.

Dans l'exemple représenté, l'aube 10 est réalisée en matériau composite par un procédé d'injection appelé procédé RTM (acronyme de l'anglais *Resin Transfer Molding*)*.* Ce procédé consiste à préparer une préforme fibreuse 18 par tissage en trois dimensions puis à disposer cette préforme dans un moule et d'y injecter une résine polymérisable telle qu'une résine époxy, qui va imprégner la préforme. Après polymérisation et durcissement de la pale 12, son bord d'attaque 12c est en général renforcé par un bouclier métallique 20 rapporté et fixé, par exemple par collage.

L'aube 10 comprend ici un longeron 22. Le longeron 22 comprend une partie formant une âme de la pale 12. La partie du longeron 22 formant l'âme de la pale 12 est destinée à être insérée dans la préforme 18 avant l'injection de résine. Le longeron 22 comprend aussi une partie qui s'étend du côté opposé au sommet de la pale 12 pour former le pied 14.

Le longeron 22 est préférentiellement en matériau composite. Il s'agit par exemple d'un matériau composite à matrice organique époxy renforcée par fibres de carbone tissées 3D avec la direction chaîne majoritairement orientée radialement et la trame majoritairement orientée selon la corde de la pale 12 à hauteur de veine aérodynamique.

En variante, le longeron peut également être formé par un assemblage plus avantageux mécaniquement de différents matériaux composites à matrice organique (thermodurcissable, thermoplastique ou élastomère) renforcés par fibres longues (carbone, verre, aramide, polypropylène) selon plusieurs arrangements fibreux (tissé, tressé, tricoté, unidirectionnel).

Bien que cela ne soit pas représenté, la pale 12 peut être creuse ou pleine et comprendre une cavité interne remplie avec un matériau de remplissage du type mousse ou nid d'abeille. Ce matériau de remplissage est installé autour du longeron 22 et il est recouvert d'une peau en matériau composite à matrice organique pour augmenter la résistance de la pale 12 à l'impact.

Le bouclier 20 peut être titane ou alliage de titane, inox, acier, aluminium, nickel, etc. L'intrados 12a voire l'extrados 12b de la pale 12 peut être recouvert d'un film polyuréthane pour la protection à l'érosion.

Le pied 14 est ici dénué de fût annulaire métallique l'enveloppant.

L'axe "A" est un axe d'allongement de l'aube 10 et de la pale 12 et en particulier un axe "A" de calage de l'aube 10, c'est-à-dire l'axe autour duquel la position angulaire de l'aube 10 est ajustée. C'est en général aussi un axe radial qui s'étend donc suivant un rayon par rapport à l'axe de rotation de l'hélice équipée de cette aube 10.

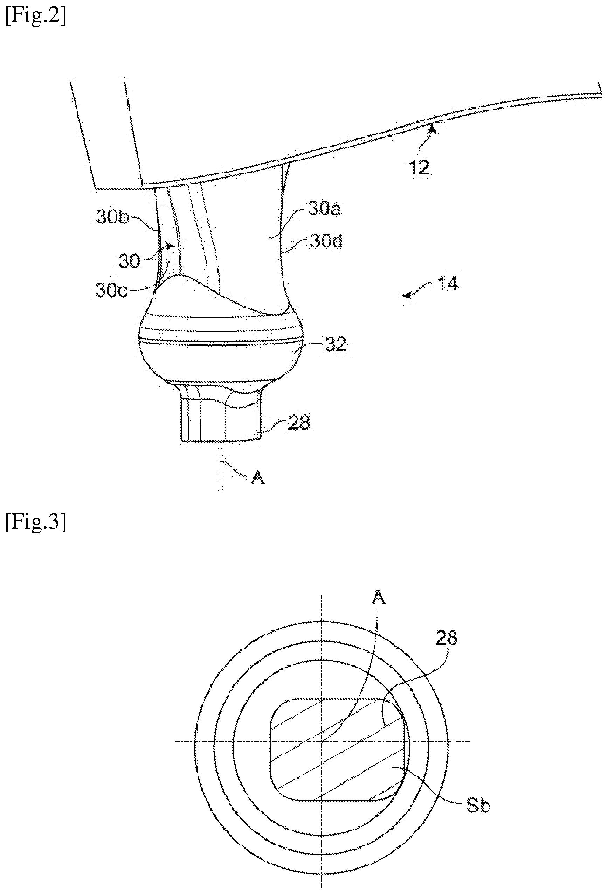

Le pied 14 a une forme particulière mieux visible à la figure 2. Le pied 14 comprend pour l'essentiel trois parties à savoir :
- une extrémité 28 inférieure libre située du côté opposé à la pale 12,
- une échasse 30 supérieure située du côté de la pale 12, et
- un tronçon renflé, appelé "bulbe" 32, situé entre l'extrémité 28 libre et l'échasse 30.

L'extrémité 28 libre a une forme générale parallélépipédique dans l'exemple représenté. Comme on peut le voir à la figure 3, cette extrémité 28 libre est désaxée ou décalée par rapport à l'axe "A" de calage pour réaliser un détrompage ou indexage, comme cela sera expliqué plus en détail dans ce qui suit.

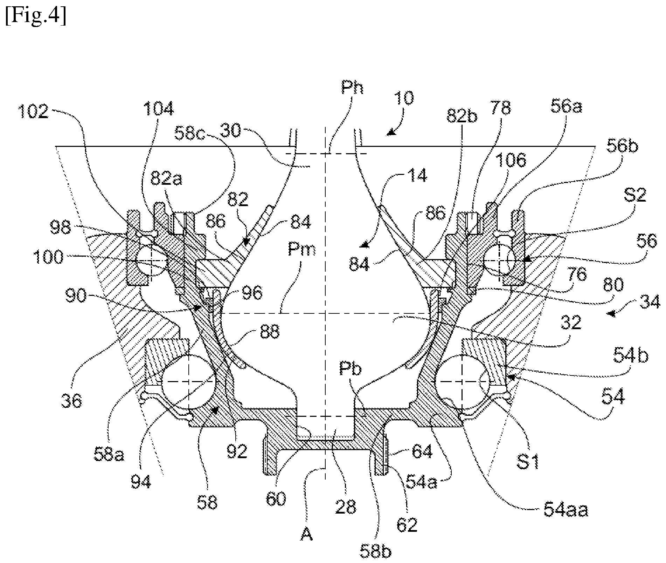

En se référant à la figure 4, on définit Pb comme un plan transversal, c'est-à-dire un plan perpendiculaire à l'axe "A" de calage, passant sensiblement par le milieu de l'extrémité 28 libre, mesurée le long de l'axe "A" de calage. Ce plan Pb est appelé plan bas ou inférieur. La figure 3 montre la forme en section de l'extrémité 28 libre dans ce plan Pb. Cette section, appelée section basse, a une valeur ou une aire, par exemple maximale, notée Sb et a une forme générale rectangulaire dans l'exemple représenté.

Comme cela sera également décrit dans ce qui suit, l'extrémité 28 libre est configurée pour coopérer avec un système 34 de calage angulaire de l'aube 10.

En se reportant à nouveau à la figure 2, l'échasse 30 présente une forme relativement complexe qui permet de faire la transition entre le pied 14 et la partie de longeron 22 formant l'âme de la pale 12. L'échasse 30 comporte schématiquement :
- deux flancs latéraux 30a, 30b, situés respectivement du côté de l'intrados 12a et de l'extrados 12b de la pale 12, qui convergent l'un vers l'autre le long de l'axe "A" de calage et en direction du sommet de la pale 12, et
- deux bords, respectivement amont 30c et aval 30d, qui au contraire divergent l'un de l'autre le long de l'axe "A" de calage et en direction du sommet de la pale 12.

En référence à la figure 4, on définit Ph comme un plan transversal passant par l'échasse 30, et en particulier l'extrémité inférieure de l'échasse 30. Ce plan Ph est appelé plan haut ou supérieur. Dans ce plan, l'échasse 30 peut avoir en section une forme non circulaire et par exemple ovale, oblongue, carrée ou rectangulaire. Cette section, appelée section haute, a une valeur ou une aire, par exemple maximale, notée Sh.

Le bulbe 32 a une forme générale renflée ou bombée, ce renflement ou bombement s'étendant tout autour de l'axe "A" de calage.

On définit Pm comme un plan médian passant par le bulbe 32, et en particulier dans sa partie de plus grande section transversale, appelée par la suite section milieu, qui est notée Sm. Ce plan Pm est appelé plan moyen. Dans ce plan, le bulbe 32 peut avoir en section une forme circulaire bien que cette section ne soit pas limitative.

On comprend que le plan Pm est situé entre les plans Pb et Ph. Les dimensions maximales de la section transversale du bulbe 32 décroissent du plan Pm (Sm) jusqu'au plan Ph, ainsi que depuis le plan Pm, jusque vers le plan Pb. On comprend donc que Sm est supérieur à Sb et Sh. Par ailleurs, dans l'exemple représenté, Sh est supérieur à Sb.

L'aube 10 est destinée à être montée dans un système 34 de calage angulaire permettant de modifier sa position angulaire autour de l'axe "A" de calage par rapport à un moyeu 36 de l'hélice.

A cet effet, le système 34 de calage angulaire comporte des paliers 54, 56. Les paliers 54, 56 sont ici au nombre de deux et sont respectivement un palier inférieur 54 et un palier supérieur 56.

Les paliers 54, 56 sont du type à roulement à billes. Dans l'exemple représenté, ils ont des diamètres différents et leurs billes ont également des diamètres différents.

Le palier 54 inférieur s'étend sensiblement entre les plans Pm et Pb et donc autour d'une partie inférieure du bulbe 32. Ce palier 54 inférieur présente un diamètre plus petit que le palier 56 supérieur, et ses billes ont un diamètre supérieur à celles du palier 56 supérieur.

Le palier 54 inférieur est en outre à contact oblique. Dans l'exemple représenté, les points ou surfaces d'appui des billes sur les chemins de roulement de leurs bagues 54a, 54b sont situés sur une surface tronconique S1 qui s'étend le long de l'axe "A" de calage et dont le plus grand diamètre est situé du côté du sommet de l'aube 10.

Le palier 56 supérieur s'étend sensiblement entre les plans Pm et Ph et donc autour d'une partie supérieure du bulbe 32. Le palier 56 supérieur est en outre à contact oblique. Dans l'exemple représenté, les points ou surfaces d'appui des billes sur les chemins de roulement de leurs bagues 56a, 56b sont situés sur une surface tronconique S2 qui s'étend le long de l'axe "A" de calage et dont le plus grand diamètre est situé du côté de l'extrémité 28 libre du pied 14 de l'aube 10.

La figure 4 illustre un exemple de réalisation d'un système 34 de calage angulaire.

Le système 34 de calage angulaire comprend un bol 58. Le bol 58 comporte une paroi annulaire 58a s'étendant autour de l'axe "A" de calage. La paroi 58a annulaire délimite radialement un volume interne du bol 58. Le volume interne du bol 58 est fermé vers le bas par une paroi 58b de fond qui s'étend en regard de l'extrémité libre 28 du pied 14. Le bol 58 présente à son extrémité axiale supérieure une ouverture 58c qui est délimitée radialement par un bord d'extrémité supérieur de la paroi 58a annulaire. L'extrémité 28 libre et le bulbe 32 du pied 14 sont destinés à être insérés axialement à l'intérieur du bol 58 par l'ouverture 58c supérieure.

La paroi 58a annulaire et la paroi 58b de fond sont réalisées en une seule pièce.

La paroi 58b de fond est configurée pour coopérer par complémentarité de formes avec l'extrémité 28 libre du pied 14 de façon à ce que le bol 58 soit solidarisé en rotation avec le pied 14 autour de l'axe "A" de calage et constitue ainsi un pivot pour l'aube 10 associée.

Dans le cas présent, on comprend que la paroi 58b de fond comprend un évidement 60 ayant une section transversale non circulaire, et en particulier rectangulaire, et configurée pour recevoir l'extrémité 28 libre, comme illustré aux figures 3 et 4. Comme on le voit à la figure 2, cet évidement 60 est excentré par rapport à l'axe "A" de calage de façon analogue à l'extrémité 28 libre. Cet excentrement permet un indexage et un détrompage lors de l'insertion et du montage du pied 14 dans le bol 58, une seule position d'engagement de l'extrémité 28 libre dans l'évidement 60 étant possible.

L'évidement 60 est situé sur une face supérieure ou interne de la paroi 58b de fond du bol 58, qui est donc située à l'intérieur du bol 58 et orientée du côté du pied 14.

Le système 34 de calage angulaire génère un couple au pied 14 d'aube 10 qui s'oppose au moment de torsion issu des efforts aérodynamiques et des efforts centrifuges. Il est avantageux d'emboîter directement l'extrémité 28 libre dans l'évidement 60, sans interposition d'un élément rapporté, afin de contraindre directement la rotation du pied 14. On obtient ainsi un chemin d'effort plus direct, le moment de torsion s'appliquant directement sur le pied 14. La section basse possède des dimensions strictement inférieures à la dimension maximale de la section milieu afin de limiter l'encombrement circonférentiel à cette hauteur.

La position du tronçon milieu, le plus encombrant radialement du bulbe 32, entre les deux paliers 54, 56, est très avantageuse en termes d'encombrement radial car une partie de la hauteur de portée entre la section milieu et la section haute se situe à l'intérieur du bol 58, contrairement à l'état de l'art sur les attaches brochées intégrées dans un pivot. Cela contribue à diminuer l'encombrement radial du système 34 de calage angulaire.

Cela permet de diminuer le diamètre du palier 54 inférieur qui se situe sous la section milieu. Donc, le pied 14 d'aube 10 peut être intégré plus bas selon l'axe "A" de calage, ce qui diminue fortement le rapport de moyeu théorique associé à l'intégration du pied 14. Or, l'homme du métier sait qu'un rapport de moyeu faible améliore les performances du moteur, notamment car celui-ci est plus compact et donc plus léger. Ce dernier point est un avantage très important de la solution technique comparée à la concurrence qui propose classiquement des fûts de forme externe cylindrique.

La paroi 58b de fond comprend une face inférieure ou externe, qui est située du côté opposé au pied 14, et qui comprend un prolongement cylindrique 62 s'étendant le long de l'axe "A" de calage et comportant un filetage externe ou des cannelures rectilignes externes 64 pour l'accouplement en rotation du système 34 de calage angulaire avec un mécanisme de changement de pas qui n'est pas illustré et qui est commun aux différents systèmes 34 de calage angulaire et aubes 10 de l'hélice.

Comme on le voit à la figure 4, le bol 58 est conçu pour supporter les paliers 54, 56 qui assurent le centrage et le guidage du bol 58 autour de l'axe "A" de calage vis-à-vis du moyeu 36 de la turbomachine.

Les paliers 54, 56 peuvent faire partie du système 34 de calage angulaire. En particulier, au moins l'un des paliers de guidage peut avoir sa bague interne qui est intégrée au bol 58.

C'est ici le cas du palier 54 inférieur qui a sa bague 54a interne intégrée au bol 58. En pratique, cela signifie que le bol 58 comprend un chemin de roulement 54aa à sa périphérie externe sur laquelle roule directement les billes du palier 54 inférieur. Ce chemin de roulement comprend une surface annulaire à section incurvée concave. Ce chemin de roulement est ici situé à l'extrémité inférieure du bol 58 et de la paroi 58a annulaire. La bague 54b externe du palier 54 inférieur est fixée au moyeu 36, par exemple par frettage. Par ailleurs, le bol 58 est avantageusement conçu pour appliquer une précontrainte au palier 54 inférieur.

La bague 56b externe du palier 56 supérieur est fixée au moyeu 36, par exemple par frettage. Sa bague 56a interne est engagée sur et autour de l'extrémité supérieure libre du bol 58 et de la paroi 58a annulaire. Cette extrémité de la paroi 58a annulaire comprend une surface cylindrique externe 76 de montage de la bague 56a interne ainsi qu'un filetage externe de vissage d'un écrou 78 destiné à prendre appui axialement sur la bague 56a interne pour la maintenir serrée axialement contre un épaulement cylindrique externe 80 du bol 58.

Pour retenir axialement le pied 14 à l'intérieur du bol 58, notamment à l'encontre de la force centrifuge, il est prévu une couronne 82 de rétention annulaire qui s'étend à l'intérieur du bol 58, autour du bulbe 32. La couronne 82 de rétention est liée au bol 58 de manière à être au moins limitée en déplacement axial vers l'ouverture 58c par rapport au bol 58.

La couronne 82 de rétention présente une face 84 de portée annulaire dirigée vers le fond du bol 58. La face 84 de portée est destinée à restreindre la section de passage de l'ouverture 58c du bol 58 pour empêcher le retrait du pied 14 par l'ouverture 58c par obstacle avec le bulbe 32. Plus particulièrement, la face 84 de portée est destinée à être en contact axial avec une face 86 supérieure du bulbe 32 pour bloquer le déplacement axial du bulbe 32 vers l'ouverture 58c supérieure.

Il est par ailleurs important de fixer solidement le pied 14 dans le bol 58 afin d'éviter tout rotulage de l'aube 10 par rapport au bol 58 pendant son utilisation. A cet effet, le système 34 de calage angulaire comporte un siège 88 inférieur, formé par une face tournée vers l'ouverture 58c du bol 58, par l'intermédiaire duquel le pied 14 est en appui axial dans le bol 58 en direction du fond.

Le siège 88 appartient à une pièce distincte de la couronne 82 de rétention. Au moins l'un parmi le siège 88 et/ou la couronne 82 de rétention est monté mobile en translation axiale par rapport au bol 58 par l'intermédiaire d'au moins un mécanisme 90 de serrage pour permettre le serrage axial du bulbe 32, ici en matériau composite, entre le siège 88 et la face 84 de portée de la couronne 82 de rétention. Ainsi, cela permet d'éviter l'apparition d'un jeu axial entre la face 84 de portée et l'aube 10.

Pour qu'un tel jeu axial n'apparaisse pas, quelles que soient les conditions de fonctionnement de l'hélice, le bulbe 32 est serré entre le siège 88 et la face 84 de portée de la couronne 82 de rétention avec une précontrainte suffisamment élevée pour surpasser les efforts axiaux maximaux susceptibles d'être appliqués à l'aube 10 pendant le fonctionnement de l'hélice, par exemple de l'ordre de plusieurs dizaines de milliers de Newtons.

La couronne 82 de rétention est ici réalisée en un matériau métallique, tel que de l'acier, du titane ou un alliage de titane tel que le TA6V.

Le siège 88 est ici réalisé en un matériau métallique, tel que de l'acier, du titane ou un alliage de titane tel que le TA6V.

Pour garantir la rétention de l'aube 10 axialement dans le bol 58 sans jeu, la face 84 de portée de la couronne 82 de rétention est directement en contact avec le bulbe 32, sans interposition de pièce rapportée. La face 84 de portée de la couronne 82 de rétention présente plus particulièrement une forme complémentaire à la face 86 supérieure du bulbe 32 pour répartir les efforts sur une surface importante du bulbe 32.

Pour permettre simultanément le maintien radial du pied 14 dans le bol 58, la face 86 supérieure du bulbe 32 présente une forme globalement tronconique et la face 84 de portée présente une forme complémentaire. La face 84 de portée s'étend par exemple globalement depuis le plan médian jusqu'à l'ouverture 58c du bol 58. Ainsi, sous l'effet de la force centrifuge, le pied 14 se retrouve centré radialement dans la face 84 de portée. Cette forme permet donc d'obtenir une position stable de l'aube 10 par rapport à l'axe "A" de calage durant la rotation de l'hélice.

Par rapport à une attache brochée, l'aire de la face 84 de portée est maximisée par l'exploitation de l'ensemble de la circonférence du bas de l'aube 10. Sur une attache brochée, seules deux surfaces distinctes du pied 14 d'aube 10, respectivement situées à l'intrados et à l'extrados sont en appui sur des portées alors que les surfaces du pied 14 d'aube 10 situées au bord d'attaque et au bord de fuite sont libres. Toujours en comparaison avec une attache brochée, la hauteur des portées dans la direction de l'axe "A" de calage est bien plus importante ce qui contribue également à augmenter considérablement leur surface. Cette grande surface d'appui permet de diminuer la pression de contact quel que soit le cas de fonctionnement.

Le diamètre intérieur de la couronne 82 de rétention, mesuré à l'extrémité supérieure de la face 84 de portée, est sensiblement plus petit que le diamètre de la section milieu du bulbe 32. Pour permettre son agencement autour du bulbe 32 de manière simple, la couronne 82 de rétention est ici réalisée en plusieurs secteurs, dont deux secteurs 82a, 82b sont représentés à la figure 4. Ces secteurs 82a, 82b sont répartis régulièrement autour de l'axe "A" de calage.

Ces secteurs 82a, 82b peuvent être circonférentiellement en contact les uns avec les autres de manière que la face 84 de portée présente une forme annulaire continue.

En variante qui sera détaillée par la suite, les secteurs 82a, 82b sont écartés circonférentiellement les uns des autres de manière que la face 84 de portée présente une forme annulaire présentant des discontinuités entre deux secteurs 82a, 82b.

Le pied 14 est ici en appui sur le siège 88 par une face 92 inférieure du bulbe 32. Le siège 88 se présente ainsi sous la forme d'une face annulaire d'appui qui s'étend autour de l'axe "A" de calage. Le siège 88 épouse plus particulièrement la face 92 inférieure en vis-à-vis du bulbe 32, notamment pour permettre de réduire la pression de contact entre le siège 88 et le bulbe 32. Le siège 88 est directement en contact avec le pied 14, ici en matériau composite. Pour permettre de centrer le bas du pied 14 dans le bol 58, la face 92 inférieure du bulbe 32 en contact avec le siège 88 présente une forme globalement tronconique, ici convexe, et le siège 88 présente une forme complémentaire. Ainsi, le pied 14 est non seulement en appui axial vers le fond du bol 58, mais il est aussi maintenu radialement en position dans le bol 58.

En variante, le siège est en appui contre une face inférieure de l'extrémité libre du pied.

Dans l'exemple représenté à la figure 4, le siège 88 est porté par au moins une pièce rapportée dans le bol 58. Le siège 88 est ainsi intercalé entre le pied 14 et le bol 58. Le siège 88 est monté mobile en translation par l'intermédiaire d'au moins un mécanisme 90 de serrage.

Le siège 88 est ici formé par la face supérieure d'un anneau 94 réalisé en une seule pièce. Le siège 88 est destiné à être en appui contre une face annulaire inférieure du bulbe 32. A cet égard, le siège 88 présente une forme annulaire continue centrée sur l'axe "A" de calage.

L'anneau 94 portant le siège 88 est monté en appui axial vers le fond du bol 58 par l'intermédiaire d'une bague 96 de serrage appartenant au mécanisme 90 de serrage. La bague 96 de serrage entoure le siège 88.

La bague 96 de serrage présente un rebord 98 périphérique externe qui est en appui contre une face 100 annulaire d'épaulement du bol 58. La face 100 d'épaulement s'étend radialement en saillie vers l'intérieur depuis la paroi 58a annulaire et elle est tournée vers l'ouverture 58c. Cette face d'épaulement est située légèrement au-dessus du plan médian Pm.

La bague 96 de serrage est destinée à coopérer avec l'anneau 94 pour serrer le siège 88 axialement vers le haut contre le bulbe 32 en prenant appui sur la face 100 d'épaulement. A cet effet, la bague 96 de serrage est solidaire en déplacement axial avec un filetage interne qui vient se visser sur un filetage externe complémentaire réalisé sur une face externe de l'anneau 94.

Pour permettre de réaliser le serrage du siège 88 contre le bulbe 32 en tournant la bague 96 de serrage, l'un parmi le filetage externe ou le filetage externe est bloqué en rotation par rapport au bol 58.

A titre d'exemple non limitatif, il s'agit ici du filetage interne. A cet égard, la bague 96 de serrage est immobilisée en rotation par rapport au bol 58, notamment par emboîtement de formes complémentaires entre la bague 96 de serrage et le bol 58, par exemple au moyen de méplats ou de pions. Dans l'exemple représenté à la figure 4, le filetage externe est réalisé en une pièce avec le siège 88.

En variante non représentée, le filetage externe est formé par une bague rapportée sur l'anneau et solidaire axialement du siège. Ladite bague est par exemple montée à rotation autour de l'anneau.

Par ailleurs, la couronne 82 de rétention est ici rapportée sur le bol 58. Elle est réalisée en plusieurs secteurs 82a, 82b distincts qui sont destinés à être liés axialement au bol 58 par un dispositif de crabotage. Pour faciliter l'insertion des secteurs 82a, 82b, la couronne 82 de rétention est réalisée en au moins trois secteurs dont seulement deux sont représentés à la figure 4.

Ainsi, chaque secteur 82a, 82b comporte au moins une dent 102 externe de crabot configurée pour coopérer avec des dents 104 internes de crabot complémentaires de la paroi 58a annulaire du bol 58. Les dents 102 externes de crabot ont par exemple chacune une extension angulaire autour de l'axe "A" de calage, comprise entre 20 et 30° environ.

Les dents 104 internes de crabot du bol 58 sont régulièrement espacées autour de l'axe "A" de calage. Elles sont au nombre de six dans l'exemple non limitatif représenté. Elles ont par exemple chacune une extension angulaire autour de l'axe "A" de calage, comprise entre 20 et 30° environ.

Les dents 102 externes de crabot sont complémentaires des dents 104 internes de crabot et sont configurées pour coopérer par crabotage avec ces dents 104 internes de crabot. Le crabotage est un mode de montage bien connu dans le domaine aéronautique qui sera décrit plus en détails par la suite. Lors du montage de l'ensemble formé par l'aube 10 et le système 34 de calage angulaire, l'anneau 94 portant le siège 88 est tout d'abord inséré dans le bol 58 par son ouverture 58c supérieure. L'anneau 94 est préalablement vissé avec sa bague 96 de serrage de manière à ce que le siège 88 occupe sa position la plus basse dans le bol 58 lorsque la bague 96 est appuyée contre la face 100 d'épaulement. L'anneau 94 et sa bague 96 de serrage sont positionnés de manière que le rebord 98 de la bague 96 de serrage soit en appui sur la face 100 d'épaulement du bol 58.

Puis le pied 14 est inséré par son extrémité 28 libre à travers l'ouverture 58c supérieure du bol 58. Le pied 14 est positionné de panière que le bulbe 32 soit reçu en appui contre le siège 88.

Puis les secteurs 82a, 82b de la couronne 82 de rétention sont insérés dans le bol 58 par son ouverture 58c supérieure. Cette insertion est facilitée par le fait que le siège 88 occupe sa position la plus basse. Cela libère un espace suffisant pour l'insertion des dents 102 externes de crabot entre les dents 104 internes de crabot sans être gêné par le bulbe 32.

Les dents 102 externes de crabot des secteurs 82a, 82b sont agencées axialement en coïncidence avec les espaces situés angulairement entre les dents 104 internes de crabot. Puis les dents 102 externes de chaque secteur 82a, 82b sont insérée axialement vers le bas dans ces espaces de manière à être au-dessous du niveau des dents 104 internes de crabot. Enfin, les secteurs 82a, 82b sont pivotés autour de l'axe "A" de calage jusqu'à ce que les dents 102 externes de crabot soient axialement au droit des dents 104 internes de crabot. Ainsi, les secteurs 82a, 82b de couronne 82 de rétention sont limités en déplacement axial vers l'ouverture 58c par contact de leurs dents 102 externes de crabot contre les dents 104 internes de crabot du bol 58.

Ensuite, le mécanisme 90 de serrage est actionné pour permettre de serrer axialement le siège 88 contre le bulbe 32. Cela a pour effet de soulever le pied 14 par rapport au bol 58 vers son ouverture 58c supérieure, jusqu'à ce que le bulbe 32 soit en appui axial contre la face 84 de portée de la couronne 82 de rétention. Ainsi, l'effort de serrage est transmis du siège 88 au bulbe 32, puis du bulbe 32 à la couronne 82 de rétention, et de la couronne 82 de rétention au bol 58 via les dents 102, 104 de crabot. Un effort de réaction prend place entre la bague 96 de serrage et le bol 58 via la face 100 d'épaulement. Le pied 14 est ainsi uniquement en contact direct avec la face 84 de portée de la couronne 82 de rétention et avec le siège 88 de l'anneau 94.

Pour l'actionnement du mécanisme 90 de serrage, un intervalle est réservé angulairement entre au moins deux secteurs 82a, 82b de couronne 82 de rétention pour permettre l'insertion d'un outil de serrage (non représenté) par l'ouverture 58c supérieure. Le serrage est ici réalisé au moyen d'un outil comportant au moins un pignon qui est inséré dans le bol 58. Le pignon est destiné à être engrené avec une denture 106 externe portée par la périphérie du siège 88. La denture 106 externe est ici agencée juste au-dessus de la bague 96 de serrage.

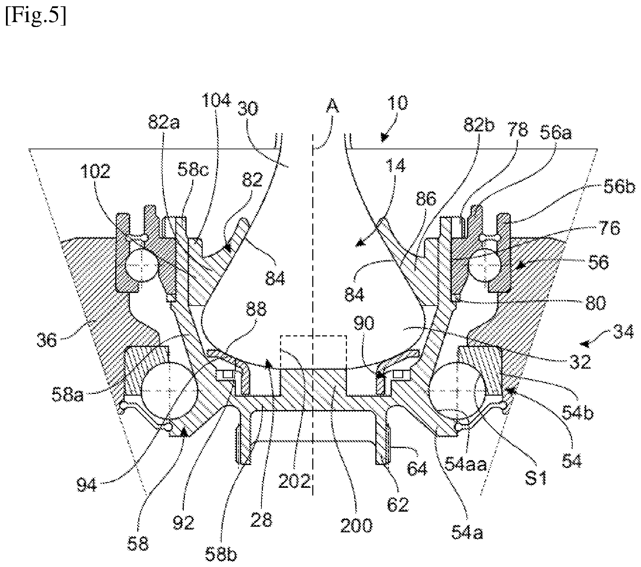

La figure 5 illustre un premier mode de réalisation de l'invention dans lequel les éléments déjà décrits dans ce qui précède sont référencés par les mêmes numéros.

La paroi 58b de fond est configurée pour coopérer par complémentarité de formes avec l'extrémité 28 libre du pied 14 de façon à ce que le bol 58 soit solidarisé en rotation avec le pied 14 autour de l'axe "A" de calage et constitue ainsi un pivot pour l'aube 10 associée.

Dans le mode de réalisation de la figure 5, la paroi 58b de fond comprend une protubérance 200 configurée pour être engagée dans un évidement 202 de forme complémentaire de l'extrémité libre 28 du pied.

Dans l'exemple représenté, on remarque que la protubérance 200 et l'évidement 202 sont désaxés par rapport à l'axe A ce qui permet de réaliser un détrompage au montage.

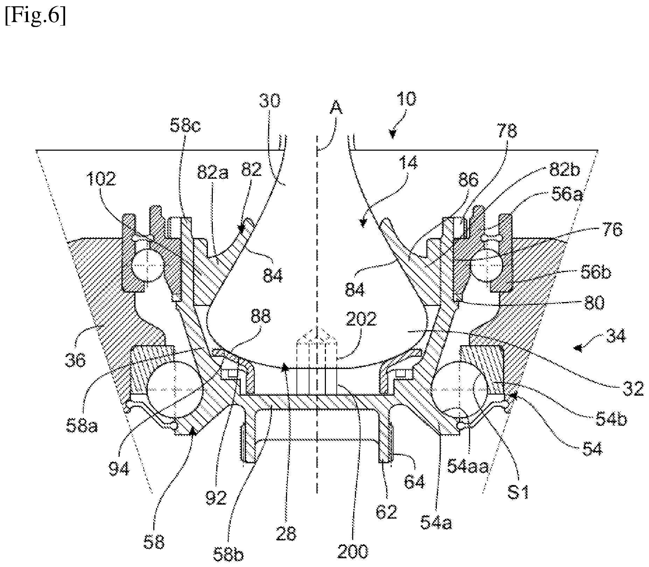

La figure 6 illustre une variante de réalisation de l'invention. La paroi 58b de fond comprend une protubérance 200 configurée pour être engagée dans un évidement 202 de forme complémentaire de l'extrémité 28 libre, la protubérance 200 et l'évidement 202 étant ici centrés sur l'axe A.

L'évidement 202 peut être formé dans une partie en matériau métallique du pied 14, par exemple dans un insert métallique du pied ou dans une extrémité du longeron 22 lorsqu'il est métallique. En variante, l'évidement 202 peut être formé dans une partie en matériau composite du pied 14 et en particulier du longeron 22.

De préférence, la protubérance 200 a une plus petite section transversale que celles du bulbe 32 et de l'échasse 30. L'échasse 30 a une plus petite section transversale que le bulbe 32.

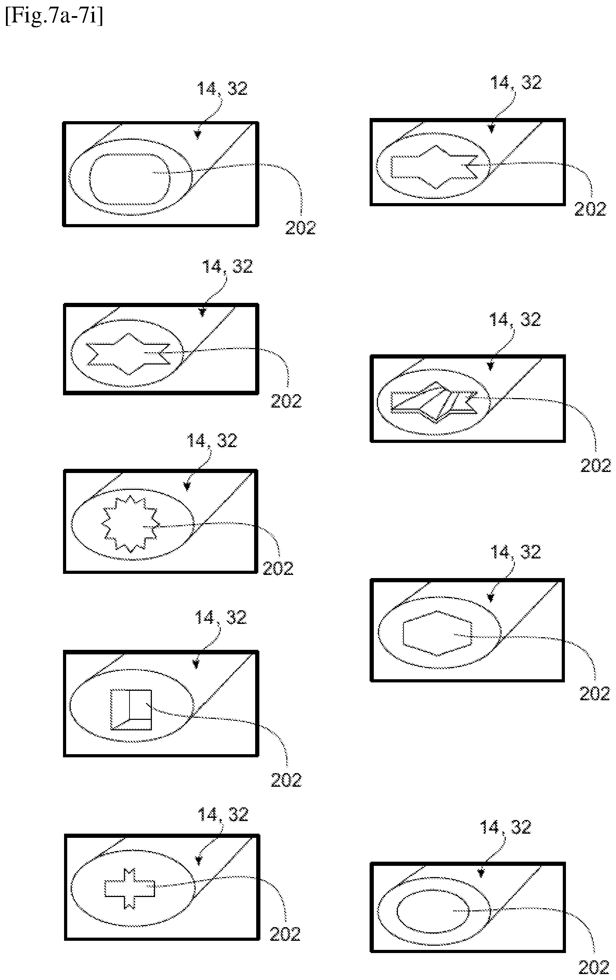

Les figures 7a à 7i montrent différentes formes possibles en section transversale de l'évidement 202 et de la protubérance 200.

La forme est ovale ou elliptique à la figure 7a avec par exemple deux côtés plats diamétralement opposés par rapport à l'axe A.

La forme est en étoile à la figure 7b avec une ou plusieurs branches de l'étoile qui est/sont remplacée(s) par une partie rectangulaire.

La forme est en étoile à la figure 7c.

La forme est en étoile à la figure 7d mais avec une section interne qui varie et en particulier qui décroît le long de l'axe A.

Les formes sont polygonales aux figures 7e à 7g, et plus exactement en soleil à la figure 7e, hexagonale à la figure 7f, et carré à la figure 7g.

La forme est ronde ou elliptique à la figure 7h.

Et la forme est en croix à la figure 7i mais avec des extrémités des branches identiques deux à deux.

L'évidement 202 peut être réalisé par usinage du pied 14 ou peut être directement obtenu en sortie de moule, sans retouche particulière.

## Revendications

1. Ensemble comportant une aube (10) d'hélice et un système (34) de calage angulaire de l'aube (10) autour d'un axe, appelé axe de calage (A), pour une turbomachine d'aéronef,
l'aube (10) présentant un pied (14) s'étendant depuis une extrémité supérieure liée à une pale (12) de l'aube (10) jusqu'à une extrémité inférieure libre (28), le pied (14) présentant un tronçon renflé, appelé "bulbe (32)",
le système (34) de calage angulaire de l'aube (10) comportant un bol (58) qui est délimité radialement par une paroi annulaire (58a) s'étendant autour de l'axe de calage (A), le bol (58) comportant un fond inférieur fermé par une paroi de fond (58b) et une ouverture supérieure (58c) par laquelle le bulbe (32) est destiné à être inséré axialement dans le bol (58), la paroi de fond (58b) étant configurée pour coopérer par complémentarité de formes avec l'extrémité libre (28) du pied (14) de façon à ce que le bol (58) soit solidarisé en rotation avec le pied (14) autour de l'axe de calage (A),
**caractérisé en ce que** la paroi de fond (58b) comprend une protubérance (200) qui s'étend le long de l'axe de calage (A) et qui est engagée dans un évidement (202) de forme complémentaire de l'extrémité libre (28) du pied (14).

2. Ensemble selon la revendication 1, **caractérisé en ce que** l'évidement (202) et la protubérance (200) sont décentrés par rapport audit axe de calage (A).

3. Ensemble selon la revendication 1, **caractérisé en ce que** l'évidement (202) et la protubérance (200) sont centrés sur ledit axe de calage (A).

4. Ensemble selon l'une des revendications 1 à 3, **caractérisé en ce que** l'évidement (202) est formé dans une partie en matériau métallique du pied (14).

5. Ensemble selon l'une des revendications 1 à 3, **caractérisé en ce que** l'évidement (202) est formé dans une partie en matériau composite du pied (14).

6. Ensemble selon l'une des revendications précédentes, **caractérisé en ce que** l'évidement (202) et la protubérance (200) ont en section transversale une forme choisie parmi une ellipse, une étoile, une croix, et un polygone.

7. Ensemble selon l'une des revendications précédentes, **caractérisé en ce que** la protubérance (200) a une plus petite section transversale que le bulbe (32).

8. Ensemble selon l'une des revendications précédentes, **caractérisé en ce que** le bulbe (32) est relié à la pale (12) par une échasse (30) de plus petite section transversale que le bulbe (32).

9. Ensemble selon la revendication précédente, **caractérisé en ce que** la protubérance (200) a une plus petite section transversale que l'échasse (30).

10. Ensemble selon l'une des revendications précédentes, **caractérisé en ce que** le bulbe (32) présente en section une forme arrondie convexe tout autour de l'axe de calage (A).

11. Ensemble selon l'une des revendications précédentes, **caractérisé en ce que** le bulbe (32) est relié à la pale (12) par une échasse (30) de plus petite section transversale que le bulbe (32).

12. Ensemble selon la revendication précédente, **caractérisé en ce que** la protubérance (200) a une plus petite section transversale que l'échasse (30).

13. Ensemble selon l'une des revendications précédentes, **caractérisé en ce que** la protubérance (200) a une plus petite section transversale que le bulbe (32).

14. Turbomachine d'aéronef, comportant un ensemble selon l'une des revendications précédentes.

## Patentansprüche

1. Baugruppe, umfassend eine Propellerschaufel (10) und ein System (34) zur Winkelverstellung der Schaufel (10) um eine Achse, genannt Verstellachse (A), herum, für ein Turbotriebwerk eines Luftfahrzeugs,
wobei die Schaufel (10) einen Fuß (14) aufweist, der sich ab einem oberen Ende, das mit einem Blatt (12) der Schaufel (10) verbunden ist, bis zu einem freien unteren Ende (28) erstreckt, wobei der Fuß (14) einen gewölbten Abschnitt, genannt "Bulbus (32)" aufweist,
wobei das System (34) zur Winkelverstellung der Schaufel (10) eine Glocke (58) umfasst, die radial durch eine ringförmige Wand (58a) eingegrenzt ist, die sich um die Verstellachse (A) herum erstreckt, wobei die Glocke (58) einen unteren Boden, der durch eine Bodenwand (58b) verschlossen ist, und eine obere Öffnung (58c) umfasst, durch die der Bulbus (32) dazu bestimmt wird, axial in die Glocke (58) eingesetzt zu werden, wobei die Bodenwand (58b) konfiguriert ist, um durch Formkomplementarität mit dem freien Ende (28) des Fußes (14) auf eine Weise zusammenzuwirken, dass die Glocke (58) mit dem Fuß (14) um die Verstellachse (A) herum drehfest vorliegt,
**dadurch gekennzeichnet, dass** die Bodenwand (58b) einen Vorsprung (200) beinhaltet, der sich entlang der Verstellachse (A) erstreckt und der mit einer Aussparung (202) von zu dem freien Ende (28) des Fußes (14) komplementärer Form in Eingriff vorliegt.

2. Baugruppe nach Anspruch 1, **dadurch gekennzeichnet, dass** die Aussparung (202) und der Vorsprung (200) bezüglich der Verstellachse (A) exzentrisch vorliegen.

3. Baugruppe nach Anspruch 1, **dadurch gekennzeichnet, dass** die Aussparung (202) und der Vorsprung (200) auf der Verstellachse (A) zentriert sind.

4. Baugruppe nach einem der Ansprüche 1 bis 3, **dadurch gekennzeichnet, dass** die Aussparung (202) in einem Teil des Fußes (14) aus metallischem Material gebildet ist.

5. Baugruppe nach einem der Ansprüche 1 bis 3, **dadurch gekennzeichnet, dass** die Aussparung (202) in einem Teil des Fußes (14) aus Kompositmaterial gebildet ist.

6. Baugruppe nach einem der vorstehenden Ansprüche, **dadurch gekennzeichnet, dass** die Aussparung (202) und der Vorsprung (200) im Querschnitt eine Form aufweisen, ausgewählt aus einer Ellipse, einem Stern, einem Kreuz und einem Polygon.

7. Baugruppe nach einem der vorstehenden Ansprüche, **dadurch gekennzeichnet, dass** der Vorsprung (200) einen kleineren Querschnitt als der Bulbus (32) aufweist.

8. Baugruppe nach einem der vorstehenden Ansprüche, **dadurch gekennzeichnet, dass** der Bulbus (32) mit dem Blatt (12) durch eine Strebe (30) von kleinerem Querschnitt als der Bulbus (32) verbunden ist.

9. Baugruppe nach dem vorstehenden Anspruch, **dadurch gekennzeichnet, dass** der Vorsprung (200) einen kleineren Querschnitt als die Strebe (30) aufweist.

10. Baugruppe nach einem der vorstehenden Ansprüche, **dadurch gekennzeichnet, dass** der Bulbus (32) um die gesamte Verstellachse (A) herum einen konvexen, abgerundeten Schnitt aufweist.

11. Baugruppe nach einem der vorstehenden Ansprüche, **dadurch gekennzeichnet, dass** der Bulbus (32) mit dem Blatt (12) durch eine Strebe (30) von kleinerem Querschnitt als der Bulbus (32) verbunden ist.

12. Baugruppe nach dem vorstehenden Anspruch, **dadurch gekennzeichnet, dass** der Vorsprung (200) einen kleineren Querschnitt als die Strebe (30) aufweist.

13. Baugruppe nach einem der vorstehenden Ansprüche, **dadurch gekennzeichnet, dass** der Vorsprung (200) einen kleineren Querschnitt als der Bulbus (32) aufweist.

14. Turbotriebwerk eines Luftfahrzeugs, umfassend eine Baugruppe nach einem der vorstehenden Ansprüche.

## Claims

1. An assembly comprising a propeller vane (10) and a system (34) for angularly setting the pitch of the vane (10) about an axis, called the pitch axis (A), for an aircraft turbomachine,
the vane (10) having a root (14) extending from an upper end connected to a blade (12) of the vane (10) to a free lower end (28), the root (14) having a bulged section, called a "bulb (32)",
the system (34) for angularly setting the pitch of the vane (10) comprising a cup (58) which is radially delimited by an annular wall (58a) extending around the pitch axis (A), the cup (58) comprising a lower bottom closed by a bottom wall (58b) and an upper opening (58c) through which the bulb (32) is intended to be inserted axially into the cup (58), the bottom wall (58b) being configured to cooperate in a form-fitting manner with the free end (28) of the root (14) in such a way that the cup (58) is secured in rotation with the root (14) about the pitch axis (A),
**characterised in that** the bottom wall (58b) comprises a protuberance (200) which extends along the pitch axis (A) and which is engaged in a recess (202) of complementary shape to the free end (28) of the root (14).

2. The assembly according to claim 1, **characterised in that** the recess (202) and the protuberance (200) are off-centre with respect to said pitch axis (A).

3. The assembly according to claim 1, **characterised in that** the recess (202) and the protuberance (200) are centred on said pitch axis (A).

4. The assembly according to one of claims 1 to 3, **characterised in that** the recess (202) is formed in a metal material part of the root (14).

5. The assembly according to one of claims 1 to 3, **characterised in that** the recess (202) is formed in a composite material part of the root (14).

6. The assembly according to one of the preceding claims, **characterised in that** the recess (202) and the protuberance (200) have, in cross-section, a shape selected from an ellipse, a star, a cross and a polygon.

7. The assembly according to one of the preceding claims, **characterised in that** the protuberance (200) has a smaller cross-section than the bulb (32).

8. The assembly according to one of the preceding claims, **characterised in that** the bulb (32) is connected to the blade (12) by a stilt (30) of smaller cross-section than the bulb (32).

9. The assembly according to the preceding claim, **characterised in that** the protuberance (200) has a smaller cross-section than the stilt (30).

10. The assembly according to one of the preceding claims, **characterised in that** the bulb (32) has a rounded convex cross-section all around the pitch axis (A).

11. The assembly according to one of the preceding claims, **characterised in that** the bulb (32) is connected to the blade (12) by a stilt (30) of smaller cross-section than the bulb (32).

12. The assembly according to the preceding claim, **characterised in that** the protuberance (200) has a smaller cross-section than the stilt (30).

13. The assembly according to one of the preceding claims, **characterised in that** the protuberance (200) has a smaller cross-section than the bulb (32).

14. An aircraft turbomachine, comprising an assembly according to one of the preceding claims.
